# DEMANDE DE BREVET EUROPEEN

(11) **EP 2 407 272 A1**
(43) Date de publication de la demande: **18.01.2012**
(21) Numéro de dépôt: 10169674.8
(22) Date de dépôt: 15.07.2010
(51) Int. Cl.: B23Q 7/04, B23Q 39/04, B23B 13/04

(54) **Ravitaillement d'une pièce à usiner**

(71) Demandeur: Tornos SA, 2740 Moutier (CH)
(72) Inventeur: Vettori, Marco, 2732 Loveresse (CH); Simonin, Jean-Claude, 2740 Moutier (CH)
(74) Mandataire: BOVARD AG

(57) **Abrégé**

La présente invention concerne un dispositif de ravitaillement (203) d'une ou de plusieurs longueurs de pièces (201) à usiner, avec ou sans surplus de matière pour un tour multibroches. Le dispositif de ravitaillement (203) comprend un moyen de saisir la barre (201) à usiner ou partiellement usinée tenue par une broche (103), le moyen de saisir est agencé pour tenir la barre (201) à usiner, ou partiellement usinée, pour faire avancer ladite barre (201) vers l'avant et situé du côté de l'avancement de la barre (201). La solution proposée garantit par exemple une longueur de chute minimale. De plus, la précision de ravitaillement est augmentée et le changement de position de ravitaillement est aisé.

## Description

### DOMAINE DE L'INVENTION

L'invention se rapporte à un dispositif de ravitaillement d'une pièce à usiner pour un tour multibroches. L'invention se rapporte aussi à un tour comprenant ce dispositif de ravitaillement.

### DESCRIPTION DE L'ART ANTERIEUR

On connaît des machines-outils, telles que décolleteuses, qui comprennent des broches multiples pour recevoir la matière à usiner. Celle-ci se présente généralement sous forme d'une barre métallique. Les broches sont généralement agencées pour tourner avec la matière à usiner autour d'un axe.

Les broches sont généralement situées au moins partiellement dans un barillet qui est donc autour de ces broches. Dans certaines solutions, un barillet comprend six broches, chaque broche étant séparée angulairement de 60 degrés. Un tour comprenant un tel barillet peut également comprendre six postes de travail. Chaque poste de travail peut être équipé d'au moins un outil pour usiner la matière retenue par les broches. Pour rendre l'opération d'usinage plus efficace, chaque poste de travail peut usiner simultanément la matière retenue par une broche.

Dans les solutions connues les pièces à usiner sont ravitaillées par l'arrière du tour, c'est-à-dire les pièces sont ravitaillées au côté opposé du tour par rapport au côté d'usinage. Toutefois, le ravitaillement par l'arrière présente des désavantages. Par exemple, la partie de la pièce perdue, aussi appelée la chute, est relativement longue. De plus, les solutions connues sont assez complexes, surtout en cas de tours multibroches. Aussi la précision de ravitaillement n'est pas optimale et le changement de position de ravitaillement n'est pas toujours facile.

Sur les tours multibroches actuellement proposées sur le marché, le système de ravitaillement est généralement constitué d'une machine complète (ravitailleur), accouplée à la machine principale (tour multibroches), ou d'un système mécanique complexe, commandé par des cames. Dans les deux cas le dispositif, situé à l'arrière de la machine, est complexe et coûteux.

Afin de permettre d'optimiser la position de ravitaillement, le premier dispositif (ravitailleur) doit posséder la possibilité de pousser la barre de matière au poste choisi, ce qui multiplie les organes de commande, donc les coûts.

Le second dispositif (à cames), de part sa conception, ne permet pas de modifier cette position de ravitaillement de manière aisée et rapide, position qui est d'ailleurs généralement fixe.

### RESUME DE L'INVENTION

L'objet de la présente invention est de surmonter les problèmes des solutions connues. La présente invention propose donc une solution de ravitaillement d'une pièce à usiner pour un tour multibroches comme expliqué plus en détail plus loin.

A cet effet, l'invention a pour objet un dispositif de ravitaillement d'une pièce à usiner pour un tour multibroches, le dispositif de ravitaillement comprend un moyen de saisir la pièce à usiner tenue par une broche, le moyen de saisir est agencé pour tenir la pièce à usiner pour faire avancer la pièce vers l'avant et situé au côté de l'avancement de la pièce.

La solution proposée possède plusieurs avantages. Le dispositif de ravitaillement selon la présente invention est simple et par conséquent la solution est peu coûteuse. Le dispositif de ravitaillement proposé peut même être une contre-broche existante ce qui signifie que le coût de cette solution est minimale.

Le dispositif de ravitaillement selon la présente invention garantit aussi une longueur de chute minimale. De plus, la précision de ravitaillement est augmentée et le ravitaillement de barres meulées est aussi possible sans marques sur celles-ci, sous la condition qu'un dispositif de ravitaillement approprié, telle qu'une pince tournant en synchrone avec la barre à usiner, est utilisé ou que le ravitaillement se fasse à vitesse de rotation de broche égale à zéro.

La solution proposée permet également d'effectuer le ravitaillement de plusieurs longueurs de pièces finales en une seule fois ce qui réduit le temps de cycle total moyen d'une pièce finale donc augmente la production de la machine

On peut aussi imaginer une configuration dans laquelle au moins deux broches d'un tour multibroches sont munies d'un dispositif de ravitaillement selon la présente invention. Dans ce cas, on peut choisir la position optimale de ravitaillement en fonction des opérations d'usinage effectuées. Le changement de position de ravitaillement est donc aisé.

La solution proposée permet également d'effectuer plusieurs ravitaillements successifs, sur des postes différents, afin de permettre la réalisation de pièces longues, c'est-à-dire plus longues qu'une course totale normale de ravitaillement. Cette configuration a également comme but de réduire les porte-à-faux d'usinage.

Dans une autre configuration, un seul dispositif de ravitaillement, telle qu'une contre-broche, est fourni pour l'ensemble du tour multibroches. Ce dispositif de ravitaillement peut être déplacé sur les postes différents du tour multibroches dans le but de placer le temps de ravitaillement à l'endroit (sur le poste) qui pénalise le moins le temps de cycle.

L'invention a également pour objet un tour comprenant le dispositif de ravitaillement.

Les autres aspects de la présente invention se trouvent dans les revendications dépendantes.

### BREVE DESCRIPTION DES DESSINS

L'invention sera bien comprise à la lecture de la description ci-après faite à titre d'exemple non limitatif en regardant les dessins ci-annexés qui représentent schématiquement :
- figure 1 : une vue de face simplifiée, un barillet avec des postes de travail d'un tour multibroches,
- figure 2a-2d : une vue de côté, une configuration dans différents états pour ravitailler une pièce à usiner pour un tour multibroches selon un aspect de la présente invention, et
- figure 3 : une vue de côté, une autre configuration pour ravitailler une pièce à usiner pour un tour multibroches selon un autre aspect de la présente invention.

### DESCRIPTION DETAILLEE DES MODES DE REALISATION

En se reportant aux dessins, des dispositifs de ravitaillement pour un tour multibroches selon différents aspects conformément à la présente invention sont maintenant expliqués plus en détail. Les dispositifs de ravitaillement prévus permettent de ravitailler au moins une longueur de pièce (surplus pour la coupe et le façage de la face avant compris) en tenant et/ou tirant la barre depuis le devant (côté des outils et donc côté d'avancement de la pièce lors du fonctionnement normal de la machine) de celle-ci et non par l'arrière comme le proposent les ravitailleurs actuels ou les dispositifs de ravitaillement mécanique des machines multibroches.

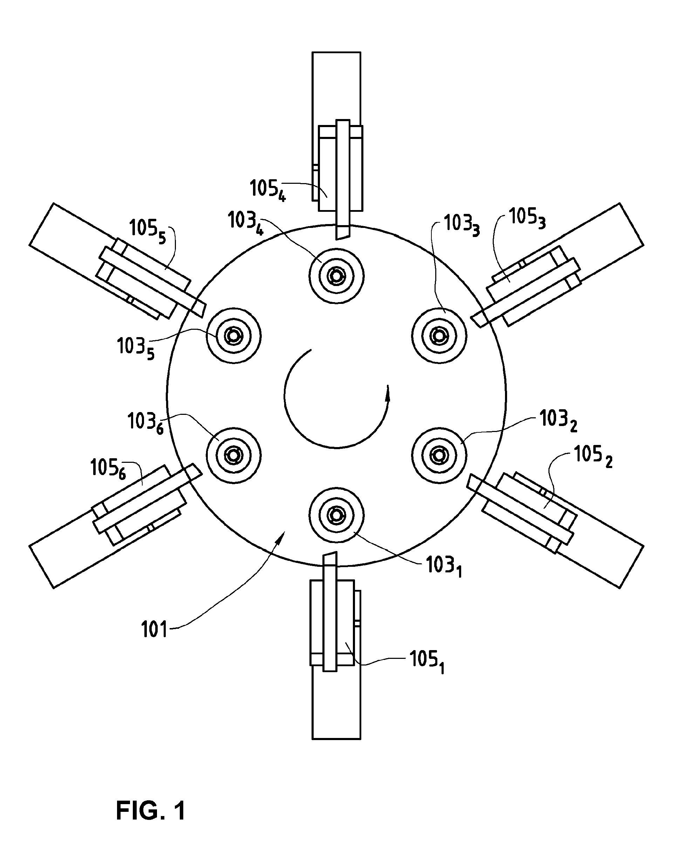

Figure 1 est une vue de face schématique d'un barillet 101 d'un tour multibroches. Dans cet exemple le barillet 101 contient six broches 103ₙ, l'indexe n pouvant prendre des valeurs 1, 2, 3, 4, 5 et 6 et indique le numéro de broche 103. Dans cette configuration chaque broche 103 est munie d'un poste d'outil 105ₙ pour effectuer des usinages différents. Ici aussi l'indexe n peut prendre des valeurs 1, 2, 3, 4, 5 et 6. Le cycle des opérations d'usinage de la pièce est commencé sur la broche numéro 1. Normalement dans les machines-outils multibroches, le nombre de postes de travail est égal au nombre de broches principales, mais toute variation du nombre de poste de travail est possible. Chaque poste de travail est équipé d'au moins un outil pour usiner la matière, telle qu'une barre métallique, retenue par les broches. Pour rendre l'opération d'usinage plus efficace, chaque poste de travail peut usiner simultanément la matière retenue par une broche.

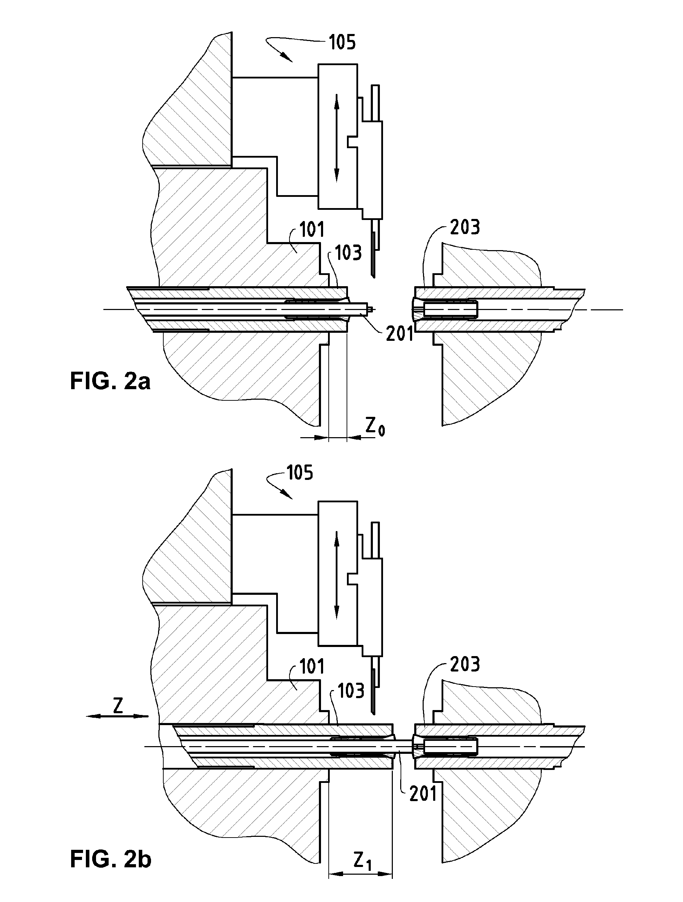

Selon l'exemple illustré sur les figures 1 et 2a-2d, le ravitaillement de la pièce 201 à usiner, telle qu'une barre 201, est effectué par une contre-broche 203 opérant depuis l'avant du barillet 101. L'opération de ravitaillement est expliquée plus en détail plus loin. Par exemple, les postes 105₁, 105₂, 105₃, 105₄ et 105₅ sont les postes de travail en opération et le poste 105₆ est le poste de travail en contre-opération, ainsi que le poste d'éjection. Sur les postes 105₁ à 105₅ les opérations suivantes sont effectuées : l'approche de l'outil ; l'usinage ; et le dégagement de l'outil. Les opérations suivantes sont effectuées sur le poste 105₆ : La prise de la barre 201, partiellement usinée ou non, par la contre-broche 203 ; le ravitaillement d'une longueur de pièce avec le surplus nécessaire de la barre 201 (par déplacement de la contre-broche et/ou de la broche principale) ; la coupe de la barre 201, partiellement usinée ou non ; le recul de la contre-broche 203 ; l'usinage en contre-opération, l'éjection de la pièce obtenue 201 de la contre-broche 203. L'indexage du barillet 101 se fait au plus tôt lorsque tous les postes sont dégagés et que l'extrémité de la barre 201, usinée ou non, a été coupée.

Selon la présente invention il est avantageux de pouvoir choisir la position de ravitaillement de la barre 201 (fonction improductive), en fonction du temps nécessaire sur chaque poste et ce, dans le but de placer le temps de ravitaillement à l'endroit (sur le poste) qui pénalise le moins le temps de cycle total de la pièce 201. Dans cet exemple le dispositif 203 qui effectue le ravitaillement peut être déplacé entre différents postes de travail 105. Dans l'exemple illustré sur la figure 1, le poste 105₆ est donc le poste de ravitaillement principal et le poste 105₁ est le poste de ravitaillement en option du au fait que le cycle d'usinage commence sur le poste 105₁. On pourrait aussi envisager de dédier (ou rajouter) un poste de ravitaillement 105, mais cela va à l'encontre du but fixé de réduire les coûts.

Dans l'exemple représenté plus haut, le système de ravitaillement proposé peut être utilisé en position 6 (dernière position avant la contre-opération et l'éjection) ou en position 1 (première position de travail), mais il va sans dire que le principe reste le même quel que soit le nombre de postes 105 ou broches 103 considéré et qu'il pourrait se situer sur un des autres postes de travail.

La plupart des machines multibroches ont recours à une contre-broche 203 pour réaliser les opérations arrières sur la pièce 201 ou pour soutenir la barre 201 lors de sa coupe puis la positionner à l'endroit d'extraction choisi.

La solution proposée permet de conserver cette contre-broche 203 pour réaliser le ravitaillement par exemple en position 6, mais permettrait également de s'en absoudre, si la machine n'en a pas besoin, en utilisant en lieu et place le même dispositif (ou une adaptation de celui-ci) utilisé pour les autres postes.

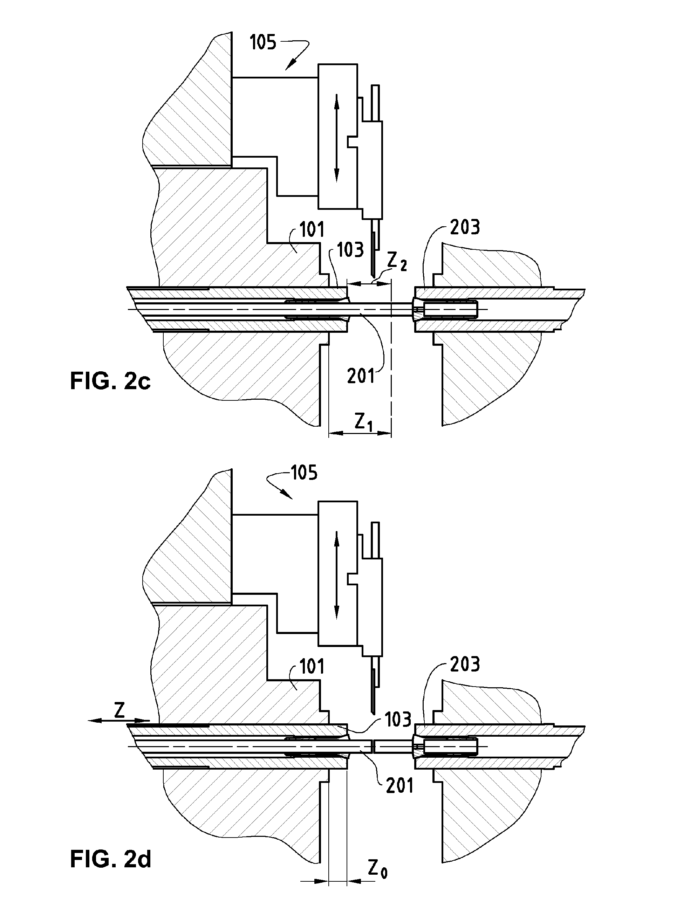

Les figures 2a, 2b, 2c et 2d montrent un exemple de ravitaillement en position 6 (position prise de pièce pour la contre-opération et/ou l'éjection). Le déplacement Z est ici réalisé par la broche principale 103, mais le principe reste le même dans le cas ou l'on choisit d'utiliser l'axe de la contre-broche 203 ou l'axe Z de l'organe qui supporte le dispositif de ravitaillement.

Sur la figure 2a on voit la situation initiale avant le commencement du ravitaillement. La distance entre l'extrémité droite de la broche 103 et la surface du barillet 101 est indiqué par la référence Z₀.

Sur la figure 2b on voit la pièce introduite dans le moyen de préhension, telle qu'une pince, de la contre-broche 203. La pièce a été introduite dans la pince de la contre-broche 203 en avançant la broche principale 103 suivant l'axe Z. Sur cette figure la distance Z₁ entre l'extrémité droite de la broche 103 et la surface du barillet 101 est plus grande que la distance Z₀. La pièce 201 est donc prise par la pince de la contre-broche 203 et la pince de la contre-broche 203 est ensuite fermée.

La pince de la broche principale 103 est ouverte pour qu'on puisse reculer, suivant l'axe Z, la broche principale 103 pour pouvoir ravitailler une longueur de pièce 201 et son surplus nécessaire de la longueur Z₂. Ensuite la pince de la broche principale 103 est fermée. Cette situation est illustrée sur la figure 2c. La broche principale 103 est alors en position Z₁-Z₂ qui est donc la distance entre l'extrémité droite de la broche 103 et la surface du barillet 101.

Sur la figure 2d on voit la pièce qui a été coupée. Après la coupe, la broche 103 est revenue en position Z₀, si nécessaire, et le barillet 101 peut être indexé pour commencer un nouveau cycle de l'usinage.

Pour les autres positions (postes 1-5), le principe reste le même mis à part qu'un appareil dédié est utilisé tel que :
- Pince fixe (pince sur broche arrêtée);
- Pince passive tournant librement (pince « folle ») ;
- Pince passive tournant synchrone avec la broche ;
- Autre combinaison des points ci-dessus avec une pince active ; ou
- Autre organe préhenseur ou éléments permettant de maintenir au minimum la barre en position Z, voir de la tirer.

Maintenant on explique plus en détail la configuration dans laquelle deux broches différentes d'un tour multibroches à six broches 103 principales sont munies chacune d'un dispositif de ravitaillement. Ces broches 103 sont chacune munie d'un poste d'outil 105 pour effectuer des usinages différents. Le cycle des opérations est commencé sur la broche numéro 1. Dans cet exemple le poste de travail 105₁ est muni d'une pince pour saisir la barre 201 arrêtée. Avant de commencer le cycle des opérations, cette pince tire la barre 201 à usiner vers l'avant pour qu'une longueur suffisante de la barre 201 soit exposée pour effectuer l'usinage. Une fois la barre 201 tirée, la pince se rétracte pour laisser place à un outil qui peut commencer l'usinage de la barre 201. Après avoir terminé l'usinage sur le poste 1, on effectue l'indexage du barillet 101 pour que l'outil sur le poste 2 puisse commencer son usinage. Chaque poste d'outil peut donc effectuer des usinages individuels sur la barre 201.

Dans cette configuration le poste 105₆ est donc le dernier poste dans le cycle de l'usinage. Ce poste 105₆ est équipé d'un outil qui permet au moins de couper la barre 201. En face de la broche 103₆ se trouve la contre-broche 203 qui est utilisée pour tenir la barre 201, partiellement usinée ou non. La contre-broche 203 n'est pas utilisée ici pour effectuer le ravitaillement d'une longueur de pièce 201 avec le surplus éventuel, mais fonctionne comme sur une machine classique, c'est-à-dire qu'elle supporte la pièce lors de la coupe de celle-ci et effectue les contre-opérations s'il y a lieu. Le barillet 101 peut être indexé dès la fin de la coupe de la pièce et un nouveau cycle des opérations peut commencer sur la broche 103₁ placée au poste 105₁.

Dans la configuration expliquée ci-dessus on peut donc choisir le poste numéro 1 ou 6 pour effectuer le ravitaillement d'une longueur de pièce et du surplus éventuel. Le but est d'optimiser le temps pour finir la pièce 201, et en fonction des usinages à effectuer, on choisit le poste de ravitaillement adéquat permettant de réduire au maximum le temps de cycle total de la pièce.

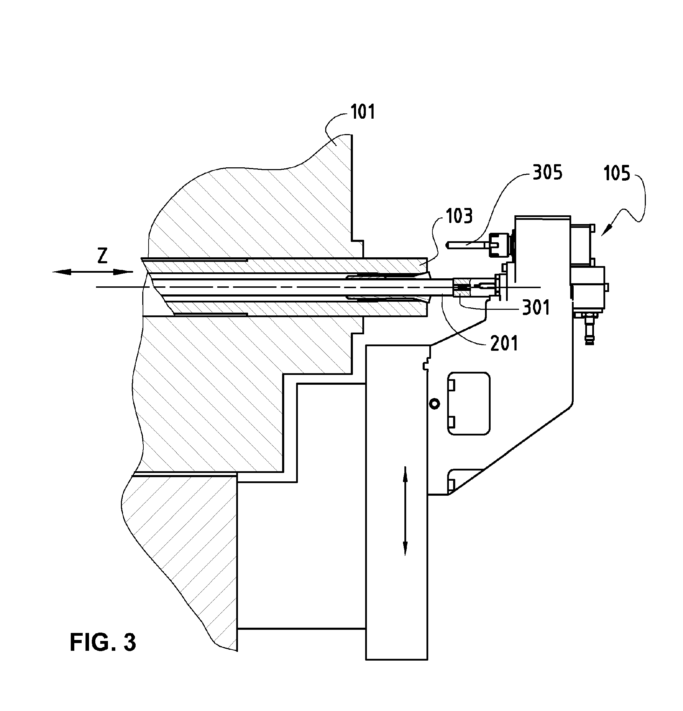

La figure 3 montre une autre configuration où une pince passive folle 301 est utilisée comme dispositif de ravitaillement. La pince folle 301 tourne librement avec la barre 201 à usiner pendant le fonctionnement du tour. Dans cet exemple, le dispositif de ravitaillement 301 est agencé pour tirer la barre 201 vers la droite ou pour retenir la matière pendant que la broche principale 103 recule (pince ouverte) d'au moins une longueur de ravitaillement. Il est à noter qu'aucun moteur externe n'est nécessaire pour faire tourner la pince folle 301. Le même principe est valable pour une pince fixe (non tournante), la broche principale étant alors arrêtée en rotation durant le temps que dure le processus de ravitaillement. Sur la figure 3 on voit aussi un outil 305 pour usiner la barre 201 avant ou après le ravitaillement de la barre 201.

Les solutions décrites ci-dessus sont donc la contre-broche, la pince passive synchronisée en vitesse, la pince passive « folle » et la pince fixe sur broche arrêtée. Toutes ces solutions sont donc agencées pour tenir, voir tirer, la barre à usiner vers l'avant et situé au côté de l'avancement de la pièce. Le ravitaillement peut être commandé numériquement. Dans le contexte des tours multibroches, une barre peut être tirée, alors que les autres barres sont simultanément usinées. Ceci augmente l'efficacité du fonctionnement du tour multibroches.

On pourrait aussi envisager plusieurs variations dans les configurations expliquées ci-dessus sans sortir du cadre de la présente invention. Par exemple, le nombre des dispositifs de ravitaillement pour un tour n'est pas limité à deux.

La distance de ravitaillement n'est pas non plus limitée à une longueur de pièce finale usinée. Si la pièce finale usinée est courte et qu'un multiple de sa longueur plus les pertes de matières dues à la coupe peuvent être ravitaillés, alors il est possible de ne faire le ravitaillement qu'après le nombre de pièces finales calculées usinées. C'est-à-dire que, si l'on ravitaille par exemple trois longueurs de pièces finales plus (+) trois fois la largeur de l'outil de coupe alors, le ravitaillement se fera toutes les trois pièces finales et non à chaque pièce finale, ce qui réduit le temps moyen du cycle pièce. Par exemple, on peut ravitailler 3 pièces de 10mm en une fois, soit: 3x10 mm + 3 x largeur du coupeur (2 mm) = ravitaillement de 36 mm toutes les 3 pièces. Le programme doit permettre de déplacer la zéro pièce (donc le départ des outils) en fonction de la pièce en cours.

Si l'on utilise plusieurs dispositifs de ravitaillement, il est également possible de ravitailler des pièces dites « longues », c'est-à-dire plus longues que les courses des différents axes sur lesquels se trouvent les outils ou le dispositif de ravitaillement. Cela a également pour avantage de travailler la barre au plus près de son moyen de serrage (pince de la broche principale) et de poursuivre le ravitaillement après la première partie usinée.

## Revendications

1. Un dispositif de ravitaillement (203 ; 301) d'une pièce (201) à usiner pour un tour multibroches, le dispositif de ravitaillement (203 ; 301) comprend un moyen de saisir la pièce (201) à usiner tenue par une broche (103), le moyen de saisir est agencé pour tenir la pièce (201) à usiner pour faire avancer la pièce (201) vers l'avant et situé au côté de l'avancement de la pièce (201).

2. Le dispositif de ravitaillement (203 ; 301) selon la revendication 1, dans lequel pour faire avancer la pièce (201), le dispositif de ravitaillement (203 ; 301) est agencé pour tirer la pièce (201).

3. Le dispositif de ravitaillement (203 ; 301) selon la revendication 1, dans lequel pour faire avancer la pièce (201), le dispositif de ravitaillement (203 ; 301) est agencé pour tenir la pièce (201) en même temps que la broche (103) relâche la pièce (201) et se recule.

4. Le dispositif de ravitaillement (203 ; 301) selon l'une quelconque des revendications précédentes, dans lequel le dispositif de ravitaillement (203 ; 301) est agencé pour être déplacé sur des postes (105) différents du tour.

5. Le dispositif de ravitaillement (203 ; 301) selon la revendication 4, dans lequel le dispositif de ravitaillement (203 ; 301) est agencé pour être déplacé sur des postes (105) différents du tour en fonction du temps de l'usinage de chacun des postes (105) différents du tour.

6. Le dispositif de ravitaillement (203 ; 301) selon l'une quelconque des revendications précédentes, dans lequel le moyen de saisir est une pince agencée pour saisir la pièce (201) en arrêt.

7. Le dispositif de ravitaillement (203 ; 301) selon l'une quelconque des revendications précédentes, dans lequel le moyen de saisir est une contre-broche (203).

8. Le dispositif de ravitaillement (203 ; 301) selon l'une quelconque des revendications 1 à 5, dans lequel le moyen de saisir est une pince (301) agencée pour tourner librement avec la pièce (201) autour d'un axe et sans entrainement supplémentaire.

9. Le dispositif de ravitaillement (203 ; 301) selon l'une quelconque des revendications 1 à 5, dans lequel le moyen de saisir est une pince agencée pour tourner en synchrone avec la pièce (201) autour d'un axe et la pince est agencée pour être entrainé par un moteur.

10. Le dispositif de ravitaillement (203 ; 301) selon l'une quelconque des revendications précédentes, dans lequel le dispositif de ravitaillement (203 ; 301) est agencé pour ravitailler au moins x longueurs de pièces finales usinées plus la distance nécessaire à la coupe pour toutes les x pièces finales usinées, x étant un nombre entier positif.

11. Un tour multibroches comprenant le dispositif de ravitaillement (203 ; 301) selon l'une quelconque des revendications 1 à 10.

12. Le tour multibroches selon la revendication 11, dans lequel le tour comprend des broches (103) multiples, et au moins deux broches (103) sont munies chacune d'un dispositif de ravitaillement selon l'une quelconque des revendications 1 à 10.

13. Le tour multibroches selon la revendication 12 dans lequel les dispositifs de ravitaillement sont utilisés successivement pour ravitailler des longueurs égales ou différentes jusqu'à l'obtention de la longueur souhaitée.

14. Le tour multibroches selon la revendication 12, dans lequel au moins certaines broches (103) sont munies d'un poste d'outil (105), et dans lequel le dispositif de ravitaillement (203 ; 301) est agencé pour être choisi en fonction des opérations d'usinage effectuées sur les postes d'outil (105) différents, un seul dispositif de ravitaillement (203 ; 301) étant utilisé pendant un cycle de l'usinage de la pièce (201).

15. Le tour multibroches selon la revendication 12 ou 14, dans lequel le tour multibroches comprend n broches (103), n'étant un nombre entier positif, le cycle de l'usinage de la pièce (201) étant commencé sur la première broche (103₁) et le cycle de l'usinage étant terminé sur la dernière broche (103ₙ), dans lequel au moins le premier poste (105₁) et le dernier poste (105ₙ) sont chacun muni d'un dispositif de ravitaillement (203 ; 301), et agencé pour être choisi en fonction des opérations d'usinage à effectuer et de la répartition des temps nécessaires sur les différents postes d'outil (105).
